# DEMANDE DE BREVET EUROPEEN

(11) **EP 0 635 351 A1**
(43) Date de publication de la demande: **25.01.1995**
(21) Numéro de dépôt: 94111310.2
(22) Date de dépôt: 20.07.1994
(51) Int. Cl.: B29C 45/44, B29C 45/26, F28F 9/02, F28F 21/06

(54) **Boîte en matière plastique moulée avec une tubulure, en particulier pour échangeur de chaleur, et procédé de moulage**

(30) Priorité: 23.07.1993 FR 9309127
(71) Demandeur: VALEO THERMIQUE MOTEUR, 78320 Le Mesnil Saint-Denis (FR)
(72) Inventeur: Perdreau, Pierre, F-53000 Laval (FR)
(74) Mandataire: Gamonal, Didier

(57) **Abrégé**

L'invention concerne une boîte en matière plastique comprenant une tubulure (16) venue de moulage.
La tubulure (16) comporte, à son extrémité (20), un organe de retenue (22) formé radialement à l'extérieur et un évidement (24) formé radialement à l'intérieur. La tubulure comprend en outre, venues de moulage avec elle, des nervures de rigidification (26) qui s'étendent axialement à l'intérieur, au moins en partie dans la région de l'évidement (24), pour limiter les déformations radiales de la tubulure lors de son démoulage en force.
Applications notamment aux boîtes à fluide d'échangeurs de chaleurs de véhicules automobiles.

## Description

L'invention concerne une boîte en matière plastique moulée et en particulier une boîte à fluide d'échangeur de chaleur de véhicule automobile.

Elle concerne plus précisément une boîte en matière plastique moulée comprenant une tubulure venue de moulage, dont l'extrémité comporte un organe de retenue formé radialement à l'extérieur et un évidement formé radialement à l'intérieur, et dans laquelle la tubulure est obtenue par démoulage en force.

On connaît déjà des boîtes de ce type qui sont obtenues par un procédé de moulage comprenant les opérations suivantes :
- l'injection de la matière plastique fondue dans un moule présentant un fourreau et une broche définissant une cavité de moulage de la tubulure,
- la solidification partielle de la matière plastique injectée dans le moule, et
- le retrait successif de la broche et du fourreau pour démouler en force la tubulure.

L'organe de retenue formé à l'extrémité de la tubulure, du côté extérieur, qui a généralement la forme d'un bourrelet ou d'une lèvre périphérique, est destiné à contribuer au maintien d'une conduite souple en caoutchouc ou matériau analogue qui est engagé autour de la tubulure. Cet organe de retenue empêche en outre le déplacement du collier de serrage qui est généralement engagé autour de l'extrémité de la conduite souple qui recouvre la tubulure.

L'évidement formé à l'extrémité de la tubulure, du côté intérieur, permet de réaliser un amincissement de matière dans la région d'extrémité de la tubulure, c'est-à-dire dans la région qui comporte l'organe de retenue.

Cet amincissement ou affaiblissement de matière facilite une déformation radiale intérieure de l'extrémité de la tubulure lors du retrait ou recul du fourreau.

Après retrait total du fourreau, l'extrémité de la tubulure tend à se déformer radialement vers l'extérieur pour reprendre la configuration qu'elle avait lors du moulage.

Il a toutefois été constaté que le procédé de moulage, avec démoulage en force de la tubulure, présentait un inconvénient.

En effet, lors du retrait ou recul du fourreau, on constate que les contraintes subies par la matière provoquent un affaissement de la paroi de la tubulure. Ces contraintes peuvent occasionner aussi des fissures dans la matière, qui sont susceptibles de nuire à une bonne étanchéité.

Pour limiter les contraintes occasionnées lors du retrait du fourreau, il faut alors réaliser des tubulures dont l'organe de retenue, c'est-à-dire le bourrelet ou la lèvre, a une hauteur radiale limitée, ce qui peut poser quelque problème.

L'invention a notamment pour but de surmonter les inconvénients précités.

Elle propose à cet effet, selon un premier aspect, une boîte en matière plastique moulée du type défini en introduction, dans laquelle, dans le but de limiter les déformations radiales de la tubulure lors du démoulage en force, cette tubulure comporte, venues de moulage avec elle, des nervures de rigidification qui s'étendent axialement à l'intérieur de la tubulure, au moins en partie dans la région de l'évidement.

Ces nervures créent ainsi des surépaisseurs de matière qui permettent de répartir les déformations sur la périphérie de la tubulure et ainsi de réduire leurs profondeurs. De cette manière, les déformations engendrées lors du démoulage en force sont ainsi contrôlées et réparties dans des régions précises de la tubulure, ce qui crée moins de contraintes dans la matière et moins de risques de création de fissures.

De ce fait, il est possible de réaliser des tubulures dont l'organe de retenue peut présenter une hauteur radiale importante.

Les nervures de rigidification peuvent s'étendre principalement dans la région de l'évidement ou bien encore en partie dans la région de l'évidement et en partie dans une région adjacente.

L'évidement réalisé à l'intérieur de l'extrémité de la tubulure peut avoir, par exemple, une forme tronconique ou encore une forme étagée avec au moins un épaulement.

Selon une autre caractéristique de l'invention, on prévoit au moins deux nervures de rigidification disposées régulièrement espacées à l'intérieur de la tubulure.

Selon une autre caractéristique avantageuse de l'invention, la tubulure comprend des protubérances venues de moulage et réparties à l'extérieur de la périphérie de la tubulure.

Ces protubérances ont principalement pour fonction de renforcer la tenue de la conduite sur la tubulure et d'augmenter la hauteur radiale de l'organe de retenue.

Avantageusement, le nombre des protubérances correspond au nombre des nervures de rigidification, les protubérances étant intercalées avec les nervures de rigidification.

Dans une forme de réalisation, l'organe de retenue est un bourrelet périphérique et les protubérances sont alors formées en saillie sur le bourrelet.

Dans une autre forme de réalisation, les protubérances sont formées directement en saillie sur la paroi de la tubulure et constituent alors l'organe de retenue. En ce cas, il n'est pas nécessaire de prévoir un bourrelet comme c'est le cas habituellement.

Sous un autre aspect l'invention concerne un procédé de moulage d'une boîte en matière plastique, du type défini en introduction, dans lequel, dans le but de limiter les déformations radiales de la tubulure lors du démoulage en force, on forme lors du moulage des nervures de rigidification qui s'étendent axialement à l'intérieur de la tubulure, au moins en partie dans la région de l'évidement.

Ces nervures qui possèdent les caractéristiques mentionnées précédemment sont formées lors du moulage par des rainures de forme conjuguée ménagées à la périphérie de la broche.

Les protubérances éventuellement formées à la périphérique de la tubulure sont créées par des rainures appropriées réalisées à l'intérieur du fourreau.

Dans la description qui suit, faite à titre d'exemple, on se réfère aux dessins annexés, sur lesquels :
- la figure 1 est une vue en coupe transversale d'une boîte à fluide d'échangeur de chaleur selon l'invention, le plan de coupe passant par l'axe de la tubulure ;
- la figure 2 est une vue en coupe partielle, à échelle agrandie, de la tubulure de la figure 1 ;
- la figure 3 est une vue d'extrémité de la tubulure de la figure 2 ;
- la figure 4 est une vue en coupe partielle analogue à celle de la figure 2, dans une autre forme de réalisation ;
- la figure 5 est une vue en coupe partielle d'une tubulure munie de protubérances extérieures ;
- la figure 6 est une vue d'extrémité de la tubulure de la figure 5 ;
- la figure 7 est une vue en coupe partielle d'une autre tubulure munie de protubérances extérieures ;
- la figure 8 représente la boîte à fluide de la figure 1 en cours de moulage ;
- la figure 9 est une vue analogue à celle de la figure 8 après démoulage en force de la tubulure ;
- les figures 10 et 11 illustrent les déformations subies par une tubulure de l'art antérieur lors du démoulage en force ;
- la figure 12 est une vue analogue à celle de la figure 8 dans une autre forme de réalisation ; et
- la figure 13 est une vue analogue à celle de la figure 9 dans cette autre forme de réalisation.

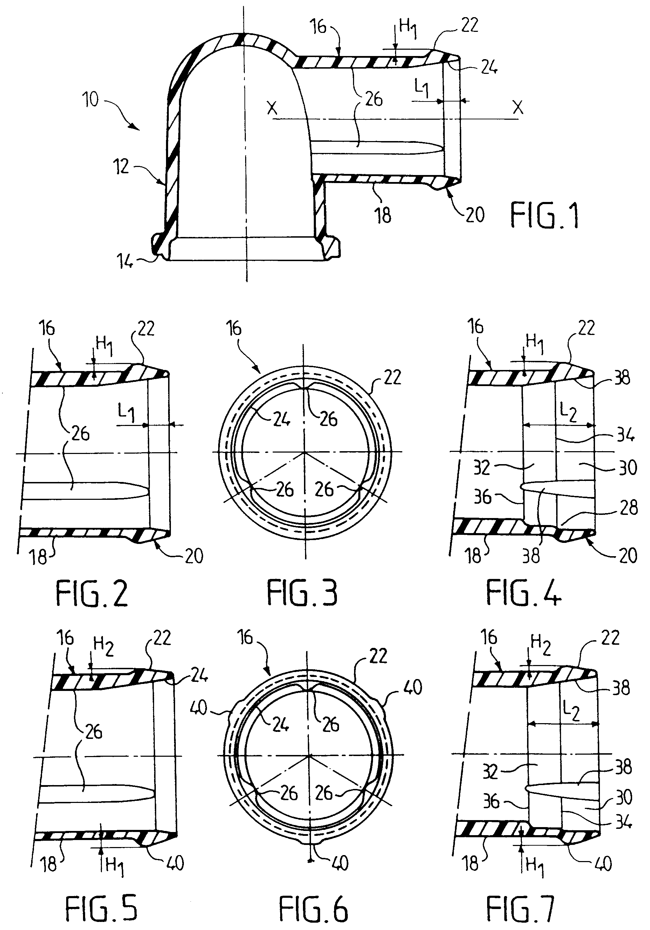

La figure 1 montre une boîte à fluide 10 en matière plastique moulée destinée à faire partie d'un échangeur de chaleur tel que, par exemple, un radiateur de refroidissement d'un moteur de véhicule automobile. La boîte 10 comprend une paroi 12 à section générale en U présentant un rebord périphérique 14 de contour sensiblement rectangulaire destiné à recevoir, de façon en soi connue, une plaque collectrice (non représentée) traversée par les tubes d'un faisceau d'échangeur de chaleur.

La paroi 12 est moulée avec une tubulure 16 délimitée par une paroi tubulaire 18 de forme générale cylindrique circulaire d'axe XX. La tubulure 16 est destinée à recevoir, de façon en soi connue, une conduite en caoutchouc ou analogue pour l'entrée ou la sortie d'un fluide servant au refroidissement du moteur. La boîte 10 peut comporter soit une seule tubulure d'entrée ou de sortie, soit deux tubulures servant respectivement à l'entrée et à la sortie du fluide de refroidissement.

La tubulure 16 comporte, au niveau de son extrémité libre 20, un organe de retenue 22 formé radialement à l'extérieur qui, dans l'exemple, est un bourrelet présentant une hauteur radiale H1 par rapport à la surface externe de la tubulure 18. Cet organe de retenue en forme de bourrelet est destiné à empêcher le dégagement accidentel d'une conduite (non représentée) emmanchée autour de la tubulure.

Au niveau de l'extrémité 20, la tubulure comporte en outre un évidement 24 formé radialement à l'intérieur et destiné à procurer un amincissement local de la paroi de la tubulure au niveau de l'extrémité 20 pour faciliter son démoulage en force.

Dans l'exemple, cet évidement est de forme générale tronconique et s'étend sur une longueur axiale L1 limitée.

Pour limiter les déformations radiales de la tubulure 12 lors du démoulage en force, cette tubulure comporte, venues de moulage avec elle, au moins deux nervures de rigidification 26 qui s'étendent axialement à l'intérieur de la tubulure.

Dans l'exemple, les nervures 26 sont au nombre de trois (figure 3) et sont disposées régulièrement espacées à l'intérieur de la tubulure, c'est-à-dire à 120° les unes des autres. Les nervures 26 s'étendent ici en partie dans la région de l'évidement 24 et en partie dans une région adjacente, c'est-à-dire sur toute la longueur restante de la tubulure. Les nervures 26 ont, en section droite, la forme générale d'un dôme de manière à ne pas perturber l'écoulement du fluide à l'intérieur de la tubulure.

La tubulure représentée à la figure 4 s'apparente à celles des figures 1 à 3, si ce n'est qu'elle comporte un évidement 28 de forme étagée et non pas tronconique. Cet évidement 28 est défini par une partie cylindrique 30 aboutissant jusqu'à l'extrémité libre de la tubulure, et par une autre partie cylindrique 32 de plus petit diamètre. La partie cylindrique 32 est reliée à la partie cylindrique 30 par un épaulement 34 et au reste de la tubulure par un épaulement 36. L'évidement 28 de forme étagée s'étend sur une longueur L2 supérieure à la longueur L1 (figures 1 et 2).

Dans la forme de réalisation de la figure 4, la tubulure comprend trois nervures de rigidification 38 s'étendant axialement et disposées à 120° les unes des autres. Dans cette forme de réalisation, chacune des nervures 38 s'étend seulement dans la région de l'évidement 28.

La tubulure représentée aux figures 5 et 6 est semblable à celle des figures 2 et 3, sauf que l'organe de retenue 22 possède ici une hauteur radiale H2 inférieure à la hauteur radiale H1 de la forme de réalisation des figures 2 et 3. De plus, dans la forme de réalisation des figures 5 et 6, la tubulure comporte trois protubérances 40 venues de moulage et réparties à l'extérieur de la périphérie de la tubulure. Le nombre des protubérances 40 correspond ainsi au nombre des nervures de rigidification 26. Les protubérances 40 sont disposées à 120° les unes des autres et sont intercalées avec les nervures de rigidification 26 (figure 6).

Dans l'exemple, les protubérances 40 sont formées en saillie sur l'organe de retenue 22 en forme de bourrelet. Il en résulte que chaque protubérances 40 (voir figure 5 en bas) s'étend à partir de la tubulure sur une hauteur radiale H1 supérieure à H2 et qui peut être identique à la valeur H1 de la forme de réalisation des figures 1 à 3.

On comprendra que le fait d'avoir une plus faible hauteur de l'organe de retenue facilite le démoulage et que la présence des protubérances 40 contribue au maintien de la conduite emmanchée autour de la tubulure et du collier de serrage.

La tubulure représentée à la figure 7 est semblable à celle de la figure 4 et elle comporte en plus trois protubérances 40 semblables à celles de la figure 5.

Dans une variante de réalisation non représentée, les protubérances 40 pourraient être formées directement sur la paroi 18 de la tubulure, et constituer ainsi l'organe de retenue. En pareil cas, il n'est pas nécessaire de prévoir un bourrelet ou une lèvre périphérique.

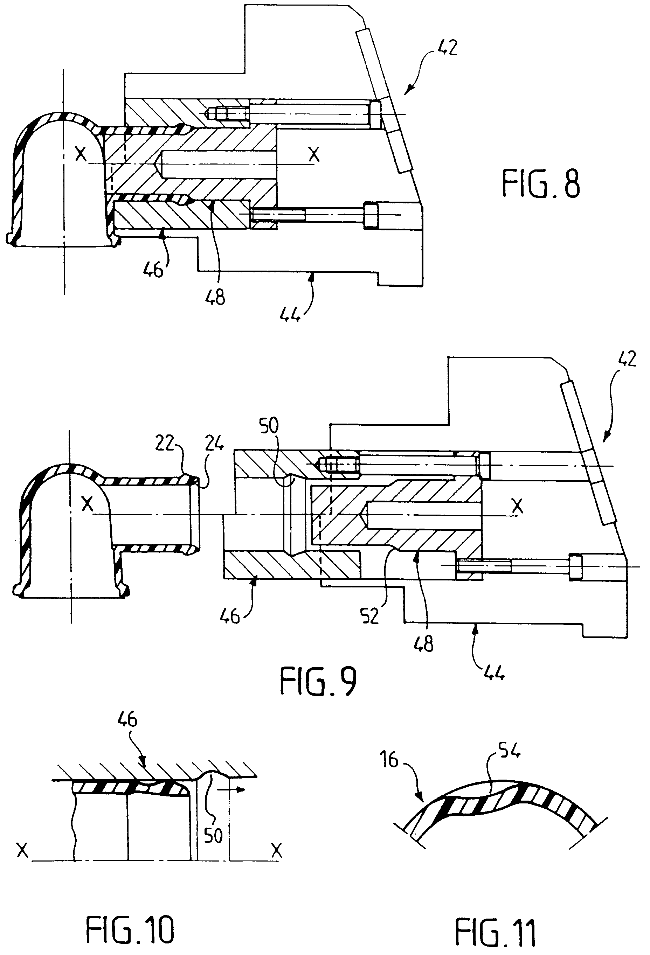

La tubulure 16 est réalisée de moulage avec la boîte à fluide au moyen d'un moule 42 (figures 8 et 9) comprenant une platine 44 déplaçable en translation dans la direction de l'axe XX. La platine 44 porte un fourreau 46 destiné à obtenir la face externe de la tubulure ainsi qu'une broche 48 déplaçable en translation par rapport au fourreau 46, suivant la direction de l'axe XX, et destinée à conformer la face interne de la tubulure.

Le fourreau 46 présente une gorge 50 destinée à la conformation de l'organe de retenue 22, tandis que la broche 48 présente un épaulement 52 destiné à la conformation de l'évidement 24. La broche 48 comporte en outre des rainures (non représentées) pour la conformation des nervures de rigidification (non représentées).

Dans la position de la figure 8, la platine 44 est dans une position rapprochée du moule (non représenté) assurant la conformation de la paroi 12 de la boîte à fluide 10. Dans cette position rapprochée, la broche 48 est dans une position adjacente au fourreau 46, l'épaulement 52 venant en regard de la gorge 50.

De la matière plastique fondue est alors injectée dans le moule conformant la paroi 12 et dans la cavité de moulage délimitée entre le fourreau 46 et la broche 48 dans la position de la figure 8.

Après solidification partielle de la matière plastique, on recule d'abord la broche 48, le fourreau 46 conservant sa position initiale, puis on recule ensuite la platine 44 pour l'amener dans la position de la figure 9.

Sur les figures 8 et 9, les nervures de rigidification n'ont pas été représentées pour simplifier le dessin.

Au cours du recul du moule 42, l'extrémité de la tubulure se déforme radialement vers l'intérieur comme montré à la figure 10. Lorsque le moule est complètement éloigné, l'extrémité de la tubulure tend à se déformer radialement vers l'extérieur pour revenir vers sa configuration de moulage.

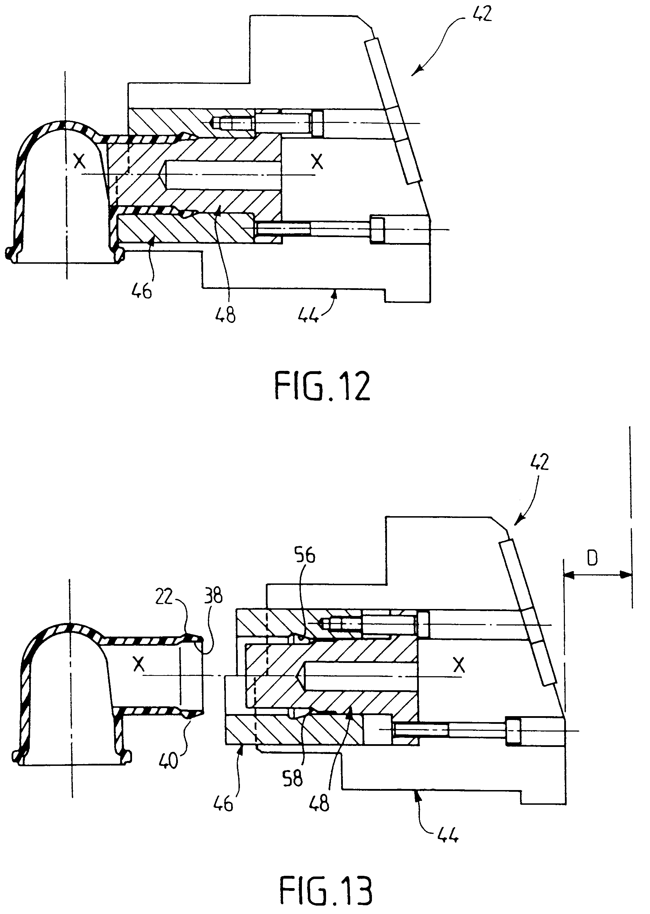

Si la tubulure ne comportait pas de nervures de rigidification, des déformations 54 (figure 11) auraient tendance à se produire de manière incontrôlée à la périphérie de la tubulure.

La présence des nervures de rigidification conformes à l'invention permet d'éviter cet inconvénient en favorisant l'apparition d'éventuelles déformations dans des régions déterminées de la périphérie, c'est-à-dire à chaque fois entre deux nervures adjacentes, ces déformations ayant nécessairement une très faible amplitude.

On peut ainsi réaliser des tubulures qui peuvent être démoulées facilement en force, même dans le cas où l'organe de retenue présente une grande hauteur radiale.

Dans la forme de réalisation des figures 12 et 13, l'appareil de moulage 42 est semblable à celui des figures 8 et 9. Il est toutefois à noter que le fourreau 46 présente ici une gorge 56 permettant de conformer l'organe de retenue 22 et les protubérances 40. En outre, la broche 48 comporte un épaulement 58 de configuration différente de l'épaulement 52 des figures 8 et 9. Elle comporte aussi des rainures (non représentées) pour le moulage des nervures de rigidification (non représentées).

Du fait des différences de structure de l'organe de retenue 22 et de l'évidement 38, on peut réaliser le démoulage de la tubulure avec une course globale plus faible de l'appareil de moulage. La différence entre la course maximale dans le cas de la figure 13 et la course dans le cas de la figure 9 correspond à la valeur D (figure 13).

L'invention permet ainsi de réaliser des boîtes en matière plastique, notamment des boites à fluide d'échangeurs de chaleur, ayant au moins une tubulure venue de moulage et dans laquelle les déformations résultant du démoulage en force sont contrôlées et limitées.

## Revendications

1. Boîte en matière plastique moulée, en particulier boîte à fluide d'échangeur de chaleur, comprenant une tubulure (16) venue de moulage dont l'extrémité (20) comporte un organe de retenue (22 ; 40) formé radialement à l'extérieur et un évidement (24 ; 28) formé radialement à l'intérieur, ladite tubulure (16) étant obtenue par démoulage en force,
caractérisée en ce que, dans le but de limiter les déformations radiales de la tubulure (16) lors du démoulage en force, ladite tubulure comporte, venues de moulage avec elle, des nervures de rigidification (26 ; 38) qui s'étendent axialement à l'intérieur de la tubulure, au moins en partie dans la région de l'évidement (24 ; 28).

2. Boîte selon la revendication 1, caractérisée en ce que en ce que les nervures de rigidification (38) s'étendent principalement dans la région de l'évidement (28).

3. Boîte selon la revendication 1, caractérisée en ce que les nervures de rigidification (26) s'étendent en partie dans la région de l'évidement (24) et en partie dans une région adjacente.

4. Boîte selon l'une des revendications 1 à 3, caractérisée en ce que l'évidement (24) est de forme générale tronconique.

5. Boîte selon l'une des revendications 1 à 3, caractérisée en ce que l'évidement (28) est de forme étagée avec au moins un épaulement (34 ; 36).

6. Boîte selon l'une des revendications 1 à 5, caractérisée en ce qu'elle comprend au moins deux nervures de rigidification (26 ; 38) disposées régulièrement espacées à l'intérieur de la tubulure.

7. Boîte selon l'une des revendications 1 à 6, caractérisée en ce que la tubulure comprend des protubérances (40) venues de moulage et réparties à l'extérieur de la périphérie.

8. Boîte selon l'une des revendications 1 à 7, caractérisée en ce que le nombre des protubérances (40) correspond au nombre des nervures de rigidification (26 ; 38) et en ce que les protubérances (40) sont intercalées avec les nervures de rigidification (26 ; 38).

9. Boîte selon l'une des revendications 7 et 8, caractérisée en ce que l'organe de retenue est un bourrelet périphérique (22) et en ce que les protubérances (40) sont formées en saillie sur ce bourrelet.

10. Boîte selon l'une des revendications 7 et 8, caractérisée en ce que les protubérances (40) sont formées directement en saillie sur la paroi (18) de la tubulure (16) et constituent ainsi l'organe de retenue.

11. Procédé de moulage d'une boîte en matière plastique moulée, en particulier d'une boîte à fluide d'échangeur de chaleur, comprenant une tubulure (16) venue de moulage et dont l'extrémité (20) comporte un organe de retenue (22 ; 40) formé radialement à l'extérieur et un évidement (24 ; 28) formé radialement à l'intérieur, ce procédé comprenant :
- l'injection de la matière plastique fondue dans un moule (42) présentant un fourreau (46) et une broche (48) définissant une cavité de moulage de la tubulure,
- la solidification partielle de la matière plastique,
- le retrait successif de la broche (48) et du fourreau (46) dans la direction axiale de la tubulure pour le démoulage en force de la tubulure,
caractérisée en ce que, dans le but de limiter les déformations radiales de la tubulure (16) lors du démoulage en force, on forme, lors du moulage, des nervures de rigidification (26 ; 38) qui s'étendent axialement à l'intérieur de la tubulure, au moins en partie dans la région de l'évidement (24 ; 28).

12. Procédé selon la revendication 11, caractérisé en ce que l'on forme les nervures de rigidification (38) principalement dans la région de l'évidement (28).

13. Procédé selon la revendication 11, caractérisé en ce que l'on forme les nervures de rigidification (26) en partie dans la région de l'évidement (24) et en partie dans une région adjacente.

14. Procédé selon l'une des revendications 11 à 13, caractérisé en ce que l'on réalise l'évidement (24) sous forme tronconique.

15. Procédé selon l'une des revendications 11 à 13, caractérisé en ce que l'on réalise l'évidement (28) sous forme étagée avec au moins un épaulement (32 ; 34).

16. Procédé selon l'une des revendications 11 à 15, caractérisé en ce que l'on forme au moins deux nervures de rigidification (26 ; 38) disposées régulièrement espacées à l'intérieur de la tubulure.

17. Procédé selon l'une des revendications 11 à 16, caractérisé en ce que l'on forme en outre, lors du moulage, des protubérances (40) réparties à l'extérieur de la périphérie de la tubulure (16).

18. Procédé selon la revendication 17, caractérisé en ce que le nombre des protubérances (40) correspond au nombre des nervures de rigidification (26 ; 38), et en ce que les protubérances (40) sont intercalées avec les nervures de rigidification (26 ; 38).

19. Procédé selon l'une des revendications 17 et 18, caractérisé en ce que l'organe de retenue (22) est un bourrelet périphérique et en ce que les protubérances (40) sont formées en saillie sur ce bourrelet.

20. Procédé selon l'une des revendications 17 et 18, caractérisé en ce que les protubérances (40) sont formées directement en saillie sur la paroi (18) de la tubulure (16) et constituent l'organe de retenue.
